# EUROPÄISCHE PATENTANMELDUNG

(11) **EP 0 939 106 A1**
(43) Veröffentlichungstag der Anmeldung: **01.09.1999**
(21) Anmeldenummer: 99103485.1
(22) Anmeldetag: 23.02.1999
(51) Int. Cl.: C08L 27/18, C08L 101/00, F16C 33/20, B32B 27/28

(54) **Gleitschichtmaterial und Schichtverbundwerkstoff**

(30) Priorität: 28.02.1998 DE 19808540
(71) Anmelder: Federal-Mogul Wiesbaden GmbH, 65201 Wiesbaden (DE)
(72) Erfinder: Adam, Achim, Dr., 64569 Nauheim (DE)

(57) **Zusammenfassung**

Es wird ein Gleitschichtmaterial beschrieben, das die Vorteile der PTFE aufweisenden Werkstoffe dahingehend erweitert, daß sie höher belastbar sind, ohne dabei auf Blei oder Bleiverbindungen zurückgreifen zu müssen. Das Gleitschichtmaterial, das als Matrixmaterial PTFE oder PTFE in Kombination mit anderen Fluorthermoplasten bzw. ein nicht PTFE aufweisendes Matrixmaterial aufweisen kann, enthält mindestens ein pulverförmiges Polyaramid, dessen Anteil 10-50 Vol.-% beträgt, wobei dieser Anteil auf die Gesamtmenge aus PTFE oder der Mischung aus PTFE und den anderen Fluorthermoplasten und dem Polyaramid bezogen ist. Es wird auch ein Schichtverbundwerkstoff beschrieben, der eine Gleitschicht aus einem solchen Gleitschichtmaterial aufweist.

## Beschreibung

Die Erfindung betrifft ein Gleitschichtmaterial, insbesondere für Lagerbuchsen, das als Matrixmaterial PTFE oder PTFE in Kombination mit anderen Fluorthermoplasten, deren Schmelzpunkt über 260°C liegt, enthält. Die Erfindung bezieht sich auch auf ein Gleitschichtmaterial gemäß dem Oberbegriff des Patentanspruchs 2 sowie auf eine Verwendung und einen Schichtverbundwerkstoff, bei dem dieses Gleitschichtmaterial zum Einsatz kommt.

Lagermaterialien mit Gleitschichten auf Kunststoffbasis sind als 1-, 2- oder 3-schichtige Verbundwerkstoffe bekannt: Vollkunststofflager, Lager mit äußerem metallischen Stutzkörper und direkt aufgebrachten oder aufgeklebtem Kunststoff, solche mit internen Metallgeweben, sowie Dreischichtlager aus Stützmetall, gesinterter poröser Metallschicht und einer auf und in den Poren ausgebildeten Deckschicht. Alle diese Lager werden meist in Bereichen eingesetzt, in denen die Verwendung von Schmierstoffen nicht möglich oder unerwünscht ist. Deshalb müssen sie selbst im Betriebszustand diese Schmierstoffe zur Verfügung stellen.

Die mehrschichtigen Werkstoffe unterscheiden sich von den Vollkunststoffmaterialien z.B. durch eine vernachlässigbare Neigung zu kaltem Fluß unter Belastung, eine wesentlich bessere Wärmeleitfähigkeit und damit verbunden durch deutlich höhere mögliche pv-Werte. Jedoch können auch Vollkunststoffmaterialien in bestimmten Fällen, z.B. aus Kostengründen, von Vorteil sein.

Innerhalb der Dreischichtwerkstoffe kann man nun wieder solche mit Gleitschichten auf der Basis von Fluorthermoplasten, wie PTFE, FEP etc. oder von anderen Kunststoffen, wie z.B. PEEK unterscheiden. Diese beiden letztgenannten Gruppen müssen in ihrer Funktionsweise unterschieden werden. Während die Bronze-Zwischenschicht bei PTFE-Basis-Werkstoffen ''aktiver'' Bestandteil der Gleitschicht ist und ähnlich wie ein Füllstoff wirkt, nutzen die anderen Kunststoff-Materialien diese nur als Verankerung. Diese Kunststoffmaterialien lassen bei genügend hoher Affinität zum Metallrücken auch die Herstellung echter Zweischichtmaterialien zu, wobei sie aber auch mit Hilfe einer Klebeschicht aufgebracht sein können. Auf der aktiven Gleitfläche selbst übernimmt hier der Duro- oder Thermoplast die tragende Rolle der Bronze.

Weiterhin sind Lagermaterialien aus auf Metall geklebten gefüllten Fluorthermoplast-Folien oder solche mit im Kunststoff inkorporierten Metallgeweben bekannt, die ebenfalls auf einen Metallrücken aufgeklebt sein können oder auch ohne steifen Metallrücken verwendbar sind.

Als universel einsetzbar und leicht herstellbar gelten aber die Dreischicht-Werkstoffe auf Basis der Fluorthermoplaste wie PTFE, die gute Leistungsfähigkeit und hohe Temperaturbeständigkeit aufweisen. Im Produktionsprozeß werden über eine Kunststoff-Dispersion homogene PTFE/Füllstoff-Pasten erzeugt und nach Aufwalzen auf das Trägermaterial durch abschließendes Sintern des PTFE der endgültige Verbundwerkstoff hergestellt.

Die z.T. am gebräuchlichsten Füllstoffe für solche Werkstoffe sind Blei und Molybdändisulfid, die Materialien ähnlicher Leistungsfähigkeit ergeben, welche auch in Gegenwart von Schmiermitteln angewendet werden können.

Wird eine Losung konstruktiver Problemstellungen unter Verwendung von wartungsfreien platzsparenden Gleitlagern mit PTFE-Gleitschicht angestrebt, muß genau auf deren obere Belastungsgrenze geachtet werden, da diese bei den oben genannten Werkstoffen mit Blei oder MoS₂ allein im mittleren Last- und Geschwindigkeitsbereich (0,5 - 100 MPa und 0,02 - 2 m/s) bei einem pv-Wert von weniger als 2 MPa m/s liegt.

Aus der DE 41 060 01 A1 und der DE 195 066 84 A1 ist es bekannt, daß durch Verwendung von PbO als Füllstoff auch leistungsfähigere Materialien erzeugt werden können, jedoch wird die Verwendung von Materialien mit einem gesundheitsgefährdenden Potential wie Blei in zunehmendem Maße abgelehnt. In der lebensmittelverarbeitenden Industrie ist sie ohnehin ausgeschlossen.

Die Möglichkeit der Verwendung von Poly-(p-phenylenterephthalamid) als Füllstoff in selbstschmierenden Lagerwerkstoffen auf PTFE-Basis wird zwar oft erwähnt, jedoch ausnahmslos in der Form von Fasern, wie z.B. in der GB 2291 879 A.

Die WO 95/02772 beschreibt einen besonderen fibrillierten Fasertyp, der in die PTFE-Matrix eingearbeitet wird. Die Faserform bedingt Probleme bei der homogenen Einmischung in die PTFE-Matrix und erfordert entsprechende Sondereinrichtungen in der Produktion. Solche Fasern haben darüber hinaus den Nachteil, daß sie lungengängige Anteile enthalten und unter dem Verdacht stehen, krebserregend zu sein.

Die Fasern werden als eine Art unregelmäßiges Flechtwerk in die Matrix eingelagert und schwächen so Zerrüttung und Erosion der ansonsten weichen PTFE-Matrix ab.

Auch als neutrales Element in Faserform und austauschbar gegen andere Fasern und daher offenbar nicht zwingend notwendig zur Erzielung einer bestimmten Eigenschaft tauchen Aramidfasern immer wieder auf, wie z.B. in der WO 97/03299 oder der GB 21 77 099 A.

Ein wesentlicher Grund für die Eignung und Verwendung von solchen Fasern sind die außergewöhnlichen mechanischen Kennwerte - sehr hohe Zugfestigkeit und E-Modul -, die auf der besonders hohen molekularen Orientierung in Faserlängsrichtung sowie der starken physikalischen Parallelverknüpfung der einzelnen starten Molekülstränge basieren.

Aufgabe dieser Erfindung ist es, ein Gleitschichtmaterial zur Verfügung zu stellen, das die oben genannten Vorteile der PTFE aufweisenden Werkstoffe dahingehend erweitert, daß sie höher belastbar sind, ohne dabei auf Blei oder Bleiverbindungen zurückgreifen zu müssen.

Diese Aufgabe wird gemäß der ersten Variante der Erfindung durch ein Gleitschichtmaterial gelöst, das mindestens ein pulverförmiges Polyaramid enthält, dessen Anteil bezogen auf die Gesamtmenge aus PTFE oder der Mischung aus PTFE und den anderen Fluorthermoplasten und dem Polyaramid 10 - 50 Vol.-% beträgt.

Gemäß einer zweiten Variante der Erfindung kann dieses Gleitschichtmaterial in ein Matrixmaterial aus einem anderen Kunststoff als den genannten eingearbeitet werden, wobei der Anteil des Matrixmaterials bezogen auf das gesamte Gleitschichtmaterial 60 - 95 Vol.-% beträgt. Das Matrixmaterial kann PPS, PA, PVDF, PSU, PES, PEI, PEEK und/oder PI sein.

Überraschenderweise hat sich gezeigt, daß der Zusatz von Polyaramidpulver, vorzugsweise aus Poly-(p-phenylentephthalamid) (PPTA) und/oder Poly-(p-benzamid) (PBA) geeignet ist, die Verschleißbeständigkeit und Belastbarkeit von Materialien mit Gleitschichten mit einer Festschmierstoffzusammensetzung auf PTFE-Basis signifikant zu erhöhen.

Die Leistungsfähigkeit konnte so weit verbessert werden, daß unter schmierungsfreien Bedingungen pv-Werte im mittleren Last- und Geschwindigkeitsbereich von über 4 MPa m/s erreicht werden können.

Die Untersuchung der Eigenschaften, beispielsweise des Zweikomponentensystems PTFE/PPTA, hat ergeben, daß zur Erzielung der vorteilhaften Eigenschaften die Mischung zu 10 - 50 Vol.-% PPTA und 50 - 90 % PTFE enthalten muß. Besonders vorteilhafte Eigenschaften werden erreicht, wenn die Mischung 10 - 30 Vol. - % PPTA enthält. Auch für andere Polyaramide konnten diese Ergebnisse bestätigt werden.

Die Korngröße des eingesetzten Pulvers sollte <100µm, vorzugsweise jedoch <50µm sein.

Außerhalb der erfindungsgemäßen Verhältnisse werden keine wesentlichen Verbesserungen gegenüber dem Stand der Technik erreicht. Es ist jedoch möglich, im Rahmen der Grenzen des Polyaramidanteils weitere geeignete Komponenten einzusetzen, wobei bezogen auf die Gesamtmenge aus PTFE oder der Mischung aus PTFE und den anderen Fluorthermoplasten sowie dem Polyaramid und den weiteren Komponenten der Anteil des Polyaramids vorzugsweise 10 Vol .- % nicht unterschreitet. Diese weiteren Komponenten können z.B. Duroplaste oder Hochtemperatur-Thermoplaste, z.B. Polyimide oder -amidimide, andere Festschmierstoffe, z.B. Bornitrid oder Molybdändisulfid, Pigmente, z.B. Koks oder Eisenoxid, Faserstoffe, z.B. Graphit- oder Aramidfasern, oder Hartstoffe wie z.B. Borcarbid oder Siliziumnitrid sein.

Als Fluorthermoplaste, die in Kombination mit PTFE eingesetzt werden können, sind PFA, FEP und/oder EPE geeignet, wobei ihr Anteil höchstens gleich groß wie der des PTFE sein sollte.

Eine bevorzugte Verwendung des Gleitschichtmaterials mit einem Matrixmaterial aus einem nicht PTFE aufweisenden Kunststoff, in das PTFE oder PTFE in Kombination mit anderen Fluorthermoplasten eingelagert ist, ist diejenige als Massivkunststoff-Gleitelement.

Der Schichtverbundwerkstoff weist mindestens eine Trägerschicht und eine erfindungsgemäße Gleitschicht auf. Die Trägerschicht kann ein Metallrücken sein, auf dem eine poröse Sinterschicht aufgebracht ist. Das Gleitschichtmaterial überdeckt die Sinterschicht und füllt die Poren mindestens teilweise aus.

Ein solcher Dreischichtwerkstoff mit einer erfindungsgemäßen Gleitschicht mit PTFE-Matrixmaterial ist beispielsweise derart aufgebaut, daß auf dem Stützmetall, wie z.B. Stahl oder einer Kupfer- oder Aluminiumlegierung eine 0,05 - 0,5 mm dicke Schicht Bronze so aufgesintert ist, daß sie ein Porenvolumen von 20 - 45 % aufweist und die Zusammensetzung der Bronze selbst 5 - 15 % Zinn und wahlweise bis zu 15 % Blei enthält. Die Kunststoffmischung wird dann durch Einwalzen so auf den porösen Untergrund aufgebracht, daß die Poren vollständig ausgefüllt sind und je nach Anwendungsfall eine 0 - 50 µm dicke Deckschicht entsteht. Im folgenden wird das Material einer Wärmebehandlung unterzogen, bei der das enthaltene PTFE gesintert wird, um in einem abschließenden Walzschritt den endgültigen Verbund und das erforderliche Endmaß herzustellen.

Gemäß einer weiteren Ausführungsform kann die Trägerschicht aus einem Metallgewebe- oder -gitter bestehen, das vom Gleitschichtmaterial überdeckt wird. Die Zwischenräume des Gewebes oder des Gitters sind zumindest teilweise mit Gleitschichtmaterial ausgefüllt.

Gemäß einer weiteren Ausführungsform kann das Gleitschichtmaterial mit einem Matrixmaterial aus einem nicht PTFE aufweisenden Kunststoff, in das PTFE oder PTFE in Kombination mit anderen Fluorthermoplasten eingelagert ist, auch unmittelbar auf der Trägerschicht aufgebracht sein.

Beispielhafte Ausführungsformen der Erfindung werden nachfolgend anhand der Zeichnungen und Tabellen näher erläutert.

Es zeigen:
- Fig. 1: ein Grenzlastdiagramm für die Beispiele 2 und 7 im Vergleich zu einem Referenzmaterial, und
- Fig. 2: ein Verschleißtiefendiagramm für die Beispiele 13 und 14.

Die Herstellung der Kunststoffmischung kann über eine PTFE-Dispersion erfolgen, der die Füllstoffe so beigemischt werden, daß sie bei der nachfolgend herbeigeführten Koagulation in homogener Verteilung mitgerissen werden. Hierbei entsteht eine pastöse Masse, die die für den nachfolgenden Beschichtungsprozeß erforderlichen Eigenschaften aufweist.

### Herstellung der Kunststoffmischungen mit PTFE-Matrixmaterial:

10 Liter Wasser, 25 g Natriumlaurylsulfat, die der Zusammensetzung entsprechende Mengen an PPTA-Pulver, weiteren Komponenten und 34 kg einer 35%igen PTFE-Dispersion werden 20 min kräftig gerührt. Danach wird 1 kg einer 20%igen Aluminiumtutrat-Lösung zugegeben. Nach erfolgter Koagulation wird 1 l Toluol in das Gemisch eingerührt und die ausgetretene Flüssigkeit entfernt.

Alle genannten Beispiele aus der Gruppe der Dreischicht-Systeme mit PTFE-Matrix-Gleitschicht können alle in dieser Weise hergestellt werden. Im folgenden sind daher nur noch die Zusammensetzungen der Kunststoffmischungen genannt.

Die Gleitschichtmaterialien sind in den erfindungsgemäßen Zusammensetzungen den Standardwerkstoffen auf Basis PTFE/MoS₂ oder PTFE/Pb sowohl bezüglich des Reibwerts als auch der Verschleißfestigkeit deutlich überlegen.

Die Zusammensetzungen aus PTFE und PPTA wurden variiert und Proben der beschriebenen Dreischichtmaterialien aus 1,25 mm Stahl, 0,23 mm Bronze und 0,02 mm Kunststoffdeckschicht hergestellt. An diesen Proben wurden mittels eines Stift/Walze-Tribometers mit Prüflingen von 0,78 cm² die Verschleißraten bei einer Umfingsgeschwindigkeit von 0,52 m/s und einer Belastung von 17,5 MPa gemessen und mit einem Standardmaterial verglichen. Als Standard wird ein Schichtverbundwerkstoff mit einer Kunststoffgleitschicht aus 80 Vol.-% PTFE und 20 Vol.-% Pb herangezogen.

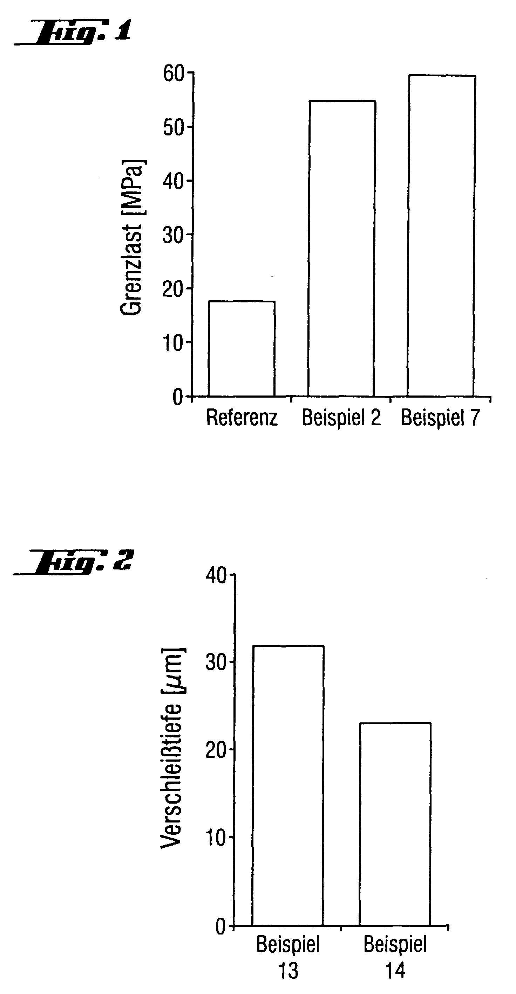

Zur Verdeutlichung der erfindungsgemäß erzielbaren Verbesserungen wurden die in Tabelle 1 zusammen mit den Reibwerten und Verschleißraten aus der Stift/Walze-Prüfung aufgeführten Materialzusammensetzungen geprüft. In Fig. 2 sind die Ergebnisse mit und ohne PPTA graphisch gegenübergestellt, die beweisen, daß die Materialien mit PPTA in jedem Fall besser abschneiden.

Aus den in Tabelle 2 gegenübergestellten Ergebnissen der Beispielzusammensetzungen 7-11 geht hervor, daß die erfindungsgemäßen Gleitschicht-Materialien auch mit weiteren Komponenten kombiniert werden können, ohne die positiven Eigenschaften zu verlieren. Durch die Zusätze sind weitere Verbesserungen möglich.

Darüber hinaus wurde die Wirksamkeit von Poly-(p-benzamid) geprüft. Das entsprechende Ergebnis vom Stift/Walze-Prüfstand ist in Tabelle 3 dargetellt. Es wird deutlich, daß zur Herbeiführung des erfindungsgemäßen Effekts auch andere dem PPTA strukturell ähnliche Materialien geeignet sind.

Von den Beispiel-Zusammensetzungen Nr. 2, 7 und 14 wurden Buchsen des Durchmessers 22 mm hergestellt und im rotierenden Prüflauf auf ihre Grenzbelastbarkeit geprüft. Als Grenzlast wurde die höchstmögliche Last definiert, bei der unter einer Geschwindigkeit von 0,075 m/s eine Laufstrecke von 13,5 km erreicht wurde. Ausfallkriterium war starker Anstieg der Temperatur.

Die Ergebnisse von Beispiel Nr. 2 und 7 entsprechen bei anderer Auswertung pv-Werten von 4 bzw. 4,5 MPa m/s und sind in Fig. 1 dem Referenzmaterial gegenübergestellt.

Fig. 2 stellt bei gleichen Testbedingungen mit Beispiel Nr. 14 eine Variante mit Thermoplast-Matrix einer vergleichbaren Zusammensetzung ohne Polyaramidpulver (Beispiel Nr. 13) gegenüber. Ausgewertet wurde der Verschleiß nach 50 h bei einer Belastung von 60 MPa. Auch hierbei wird der positive Einfluß des erfindungsgemäßen Zusatzes sichtbar.

Anstatt in ein auf einem Metallrücken aufgebrachtes poröses Sintergerüst können die erfindungsgemäßen Zusammensetzungen auch in ein Metallgewebe oder -gitter eingearbeitet werden, wodurch sich ein dünnwandiger Folienwerkstoff ergibt.

Neben dem ungeschmierten Einsatz ist auch die Verwendung in hydraulischen Systemen wie z.B. als Stangenführungsbuchse in Stoßdämpfern möglich. Hier konnten im Vergleich zum Standardwerkstoff mit PTFE/Pb-Gleitschicht verbesserte Verschleißwerte festgestellt werden. Dies ist zusammen mit den Reibwerten in Tabelle 4 dargestellt. Der Tabelle liegt ein 30h-Prüfprogramm zugrunde, das auf einer Rampenfunktion mit 80 mm Hub und 0,5 Hz basiert. Die Reibwerte wurden gegen Stoßdämpferkolbenstangen bei 1000 N mit 20 mm/s unter Tropfölschmierung ermittelt.

Eine andere Möglichkeit, die Erfindung vorteilhaft auszuführen, besteht darin, die erfindungsgemäßen Mischungen mit PTFE in eine thermoplastische Matrix einzuarbeiten, und diese dann auf beliebige Weise zu einem Gleitelement zu verarbeiten, z.B. auf einen Metallrücken mit oder ohne Bronze-Zwischenschicht aufzubringen oder Vollkunststoffteile herzustellen. Dabei kann der Thermoplast-Anteil von 60 - 95 Vol.-%, vorzugsweise 70 - 90 Vol.-% variiert werden.

Hierbei wurde als Beispiel die mit dem erfindungsgemäßen PTFE/PPTA-Gemisch gefüllte Zusammensetzung als Pulver gemischt, auf einen Stahl/Bronze-Untergrund aufgestreut, aufgeschmolzen und angewalzt. Es ist aber auch möglich, die Mischungen über Schmelzcompoundierung zu erzeugen. Als Beispiel soll hier der Einfluß auf die tribologischen Eigenschaften eines PPS-Compounds dienen, jedoch sind auch viele andere Thermoplaste wie z.B. PES, PA, PVDF, PSU, PEEK, PEI, etc. oder Duroplaste als Matrix einsetzbar. Tabelle 5 enthält zur Verdeutlichung des erfindungsgemäßen Effekts die Reib- und Verschleißwerte von PPS-Compounds mit PTFE und mit PTFE/PPTA, die unter den weiter oben für die Lagerbuchsen beschriebenen Testbedingungen ermittelt wurden. Die genauen Zusammensetzungen und Meßwerte sind ebenfalls Tabelle 5 zu entnehmen.

**Tabelle 1**

| Bsp. Nr. | Zusammensetzung, Vol.-% | Verschleiß [µm/h] | Reibwert |
|---|---|---|---|
| 0 Referenz | PTFE 80, Pb 20 | 105 | 0,21 |
| 2 | PTFE 70, PPTA 30 | 13 | 0,17 |
| 3 | PTFE 75, PPTA 25 | 25 | 0,16 |
| 4 | PTFE 80, PPTA 20 | 25 | 0,18 |
| 5 | PTFE 85, PPTA 15 | 38 | 0,20 |

**Tabelle 2**

| Bsp.Nr. | Zusammensetzung, Vol.-% | Verschleiß [µm/h] | Reibwert |
|---|---|---|---|
| 2 (z.Vgl.) | PTFE 70, PPTA 30 | 13 | 0,17 |
| 6 | PTFE 70, PPTA 20, MoS₂ 10 | 12 | 0,16 |
| 7 | PTFE 70, PPTA 20, MoS₂ 5, BN 5 | 10 | 0,18 |
| 8 | PTFE 70, PPTA 25, Fe₂O₃ 5 | 19 | 0,18 |
| 9 | PTFE 70, PPTA 25, Si₃N₄ 5 | 25 | 0,16 |
| 10 | PTFE 70, PPTA 25, C-Faser 5 | 50 | 0,21 |
| 11 | PTFE 70, PPTA 25, PI 5 | 8 | 0,19 |

**Tabelle 3**

| Bsp.Nr. | Zusammensetzung, Vol.-% | Verschleiß [µm/h] | Reibwert |
|---|---|---|---|
| 2 (z.Vgl.) | PTFE 70, PPTA 30 | 13 | 0,17 |
| 12 | PTFE 70, PBA 30 | 16 | 0,19 |

**Tabelle 4**

| Bsp.Nr. | Zusammensetzung, Vol.-% | Verschleiß [µm/h] | Reibwert |
|---|---|---|---|
| 0 Referenz | PTFE 80, Pb 20 | 45 | 0,023 |
| 2 | PTFE 70, PPTA 30 | 15 | 0,028 |
| 7 | PTFE 70, PPTA 20, MoS₂ 5, BN 5 | 12 | 0,021 |

**Tabelle 5**

| Bsp.Nr. | Zusammensetzung, Vol.-% | Verschleiß [µm/h] | Reibwert |
|---|---|---|---|
| 13 | PPS 80, PTFE 20 | 17 | 0,20 |
| 14 | PPS 80, PTFE 15, PPTA 5 | 10 | 0,17 |
| 15 | PPS 80, PTFE 15, PBA 5 | 12 | 0,17 |
| 16 | PA 11 80, PTFE 20 | 17 | 0,16 |
| 17 | PA 11 80, PTFE 15, PPTA 5 | 7 | 0,16 |

## Patentansprüche

1. Gleitschichtmaterial, insbesondere für Lagerbuchsen, das als Matrixmaterial PTFE oder PTFE in Kombination mit anderen Fluorthermoplasten, deren Schmelzpunkt über 260°C liegt, enthält, **dadurch gekennzeichnet,**
daß mindestens ein pulverförmiges Polyaramid enthalten ist, dessen Anteil bezogen auf die Gesamtmenge aus PTFE oder der Mischung aus PTFE und den anderen Fluorthermoplasten und dem Polyaramid 10 - 50 Vol.-% beträgt.

2. Gleitschichtmaterial, insbesondere für Lagerbuchsen, mit einem Matrixmaterial aus einem nicht PTFE aufweisenden Kunststoff, in das PTFE oder PTFE in Kombination mit anderen Fluorthermoplasten, deren Schmelzpunkt über 260°C liegt, eingelagert ist, **dadurch gekennzeichnet,**
daß mindestens ein pulverförmiges Polyaramid enthalten ist, dessen Anteil bezogen auf die Gesamtmenge aus PTFE oder der Mischung aus PTFE und den anderen Fluorthermoplasten und dem Polyaramid 10 - 50 Vol.-%, und daß der Anteil des Matrixmaterials bezogen auf das gesamte Gleitschichtmaterial 60 - 95 Vol.-% betragt.

3. Gleitschichtmaterial nach Anspruch 2**, dadurch gekennzeichnet,** daß das Matrixmaterial PPS, PA, PVDF, PSU, PES, PEI, PEEK und/oder PI ist.

4. Gleitschichtmaterial nach einem der Ansprüche 1 bis 3, **dadurch gekennzeichnet,** daß bezogen auf die Gesamtmenge aus PTFE oder der Mischung aus PTFE und den anderen Fluorthermoplasten und dem Polyaramid der Anteil des Polyaramids 10 - 30 Vol.-% beträgt.

5. Gleitschichtmaterial nach einem der Ansprüche 1 bis 4, **dadurch gekennzeichnet,** daß es sich bei dem Polyaramid um Poly(p-phenylenterephthalamid) und/oder Poly-(p-benzamid) handelt.

6. Gleitschichtmaterial nach einem der Ansprüche 1 bis 5, **dadurch gekennzeichnet,** daß die Korngröße des Polyaramidpulvers <100µm beträgt.

7. Gleitschichtmaterial nach einem der Ansprüche 1 bis 6, **dadurch gekennzeichnet,** daß die Korngröße des Polyaramidpulvers <50µm beträgt.

8. Gleitschichtmaterial nach einem der Ansprüche 1 bis 5, **dadurch gekennzeichnet,** daß es sich bei den Fluorthermoplasten um PFA, FEP und/oder EPE handelt und daß ihr Anteil höchstens gleich groß wie der des PTFE ist.

9. Gleitschichtmaterial nach einem der Ansprüche 1 bis 8, **dadurch gekennzeichnet,** daß ein Teil des Polyaramids durch weitere Komponenten ersetzt ist, wobei bezogen auf die Gesamtmenge aus PTFE oder der Mischung aus PTFE und den anderen Fluorthermoplasten sowie dem Polyaramid und den weiteren Komponenten der Anteil des Polyaramids 10 Vol.-% nicht unterschreitet.

10. Gleitschichtmaterial nach Anspruch 9, **dadurch gekennzeichnet,** daß es sich bei den weiteren Komponenten um eine oder mehrere aus den Gruppen der Hartstoffe, der Pigmente, der Fasermaterialien, der Festschmierstoffe, der Duro- oder Hochtemperaturthermoplaste handelt.

11. Schichtverbundwerkstoff mit mindestens einer Trägerschicht und einer Gleitschicht aus einem Gleitschichtmaterial nach einem der Ansprüche 1 bis 10.

12. Schichtverbundwerkstoff nach Anspruch 11, **dadurch gekennzeichnet,** daß die Trägerschicht ein Metallrücken ist, daß auf dem Metallrücken eine poröse Sinterschicht aufgebracht ist, und daß das Gleitschichtmaterial die Sinterschicht überdeckt und mindestens teilweise die Poren der Sinterschicht ausfüllt.

13. Schichtverbundwerkstoff nach Anspruch 11, **dadurch gekennzeichnet,** daß die Trägerschicht aus einem Metallgewebe oder -gitter besteht und daß das Gleitschichtmaterial das Metallgewebe oder -gitter überdeckt und mindestens teilweise Zwischenräume des Gewebes oder Gitters ausfüllt.

14. Schichtverbundwerkstoff mit einer Trägerschicht und einer Gleitschicht aus einem Gleitschichtmaterial nach einem der Ansprüche 2 bis 10, **dadurch gekennzeichnet,** daß das Gleitschichtmaterial unmittelbar auf der Trägerschicht aufgebrach t ist.

15. Verwendung des Gleitschichtmaterials nach einem der Ansprüche 2 bis 10 als Massivkunststoff-Gleitelement.
